## Europäisches Patentamt

(19) **European Patent Office**

**Office européen des brevets**

(11) Publication number: **0 370 067 B1**

(12) # EUROPEAN PATENT SPECIFICATION

(45) Date of publication of patent specification:
04.12.91 Bulletin 91/49

(51) Int. Cl.⁵: **G11B 5/64, H01F 41/22, C23C 18/12**

(21) Application number: **88908222.8**

(22) Date of filing: **26.09.88**

(86) International application number:
**PCT/EP88/00876**

(87) International publication number:
**WO 89/03110 06.04.89 Gazette 89/08**

(54) **PREPARATION OF THIN LAYERS OF IRON III OXIDE FOR OPTICAL AND/OR MAGNETIC RECORDING.**

(30) Priority: **29.09.87 FR 8713701**

(43) Date of publication of application:
**30.05.90 Bulletin 90/22**

(45) Publication of the grant of the patent:
**04.12.91 Bulletin 91/49**

(84) Designated Contracting States:
**BE CH DE FR GB IT LI NL**

(56) References cited:
**EP-A- 0 125 507
EP-A- 0 125 638
EP-A- 0 198 748
JP-A- 6 054 925
JP-A-61 136 683
Chemical Abstracts, vol. 103, no.6, 12.08.85, p.
673, 47082p
Patent Abstracts of Japan, vol. 10, nr. 328,
(C-383) (2384) 07.11.86**

(73) Proprietor: **EASTMAN KODAK COMPANY (a
New Jersey corporation)
343 State Street
Rochester New York 14650 (US)**

(84) Designated Contracting States:
**BE CH DE GB IT LI NL**

Proprietor: **KODAK-PATHE
26, rue Villiot
F-75594 Paris Cedex 12 (FR)**

(84) Designated Contracting States:
**FR**

(72) Inventor: **LE CARS, Yves
Kodak-Pathé 26, rue Villiot
F-75594 Paris Cédex 12 (FR)**
Inventor: **LURIN, Christian
Kodak-Pathé 26, rue Villiot
F-75594 Paris Cédex 12 (FR)**

(74) Representative: **Buff, Michel et al
Kodak-Pathé Département des Brevets et
Licences CRT Centre de Recherches et de
Technologie Zone Industrielle
F-71102 Chalon sur Saône Cédex (FR)**

EP 0 370 067 B1

## Description

The present invention relates to a method for preparing thin layers of iron$^{III}$ oxide, by coating viscous solutions formed from metal alkoxides on a support, and their application to magnetic or magneto-optical recording.

It is known to polymerize metal alkoxides, by hydrolysis and removing of alcohol. These reactions are used for forming fine and homogeneous powders, or thin layers, by high temperature pyrolysis of the resulting polymers.

Thus, HITACHI (JP 58 045 118, 58 045 119, 58 045 120, 58 045 121) uses fine powders prepared from iron alkoxide and Ba or Sr, or from Ba or Sr alkoxide and iron acetyl acetonate, to prepare permanent magnets by pressing.

Sentakako (JP 60 054 925) prepares powders of ultrafine particles of Pb, Ba or Sr hexaferrites, from a mixture of iron alkoxide and another metal alkoxide or from a double alkoxide of iron and the other metal. Alkoxides dissolved in benzene are hydrolysed by refluxing under stirring in the presence of water. The precipitate formed is collected and heated to 800°C.

UK 2 009 723 and US 3 647 531 disclose methods for producing Cd, Ti or Sb stannate layers by dipping a support in an alcoholic solution of metal alkoxides. The layer is hydrolysed after coating by drying in a humid atmosphere and then heated to 500-650°C. These products are used as electroconductive materials, or to manufacture windows or doors of microwave ovens, or solar pannels, etc...

EP 125 507 (KANEGAFUCHI) discloses the preparation of electronic or magnetic materials comprising layers of various mixed metal oxides, from solutions which are mixtures of an alkoxide of a metal and a chelate of another metal. These solutions must be stable before being coated ; optionally, a solubilizing agent and/or a stabilizer and a thickener are added to control the viscosity of the coating composition. They can be optionally hydrolysed with a small amount of water. The layers are then heated to a temperature ranging from 600 to 1000°C.

EP 125 638 (KANEGAFUCHI) discloses the obtention of thin ferrite layers, by coating oligomer or not, hydrolysed or not, alkoxide solutions containing an organic polymer, and then by treating the layers to a temperature ranging from 600 to 1000°C.

JP 61 136 683 (FUJI) discloses the obtention of an hexagonal ferrite layer for magneto-optical recording from solutions of organic metal compounds, such as carboxylates or alkoxides, optionally treated with organic acids. The compounds are dissolved and the solution is stabilized before being coated. The resulting layers are heat-treated at 600 - 800°C.

In all these methods, either the alkoxides are converted into gels, then powders are obtained by pyrolysis, or alkoxide solutions that must be stabilized are prepared to form layers which then undergo a heat treatment. It is difficult to form stable solutions. This is particularly true for alkoxides, such as iron alkoxides which are very quickly hydrolysed, such hydrolysis leading to a rapid bulk, and therefore, a solid gel is formed which can no longer be coated.

It is the reason why, in the prior art, it is proposed to stabilize the alkoxide solution by various means, without controlling the hydrolysis.

Besides, alkoxide hydrolysis is a critical process and it would be highly desirable to control it for various reasons, on the one hand, to form stable solutions having a given viscosity allowing to form layers having the desired thickness. On the other hand, it is known that metal polymer gels are precursors of the desired final oxide, i.e., the polymer structure is found at least partly in the structure of the resulting oxide. The hydrolysis conditions have significant effects on the polymer structure, and therefore, on the properties of the final oxide.

Thus, it is highly desirable to find a method for hydrolysing alkoxides of iron and/or other metals allowing to form viscous solutions of polymers having a preformed structure and a viscosity suitable for coating these polymers on a support and allowing to form layers having the expected thickness.

The present invention provides a method for preparing thin layers of iron$^{III}$ oxides by coating on a support a viscous solution formed of iron$^{III}$ oxide polymer, and by heating the coated support, said viscous solution being formed by preparing a solution of iron$^{III}$ alkoxide in an organic solvent of this alkoxide, and by adding in this solution an amount of water such that the water to alkoxide molar ratio is in the range of 3 to 15, or 60 to 80.

In fact, it has been observed that the gelation rate of a solution of iron alkoxide in an organic solvent depends on the amount of water added. If the amount of water is defined in terms of water/iron ratio, R, the gelation rate-defined as the time required for the gel to set in a solid, shows a minimum for which the gelation is quite instantaneous for a given value of R, which depends on the alkoxide or solvent nature, but does not depend on the concentration of the alkoxide in the organic solution.

Figure 1 is a curve showing the gelation time in hours versus R, in the conditions of Example 5.

Generally, it is preferred that the water/alkoxide molar ratio be in the range of 3 to 6.

According to this method, a mixture of iron alkoxide and one or more other alkoxides, or a mixed alkoxide of iron and another metal are used. An organic solvent which can dissolve the iron alkoxide and/or the alkoxides of other metals is selected. The higher the concentration of the alkoxide solution is, the thicker the layers can be.

The solvents used are lower alcohols such as ethanol, isopropyl alcohol, butanol, or chlorinated solvents such as carbon tetrachloride. The choice of the solvent can be determined by the man skilled in the art according to the solubility of the determined alkoxide and the expected final use.

Lower straight or branched chain alkoxides having from 1 to 8 carbon atoms, for example, ethoxides, propoxides, butoxides, etc. can be used as alkoxides of iron$^{III}$ and of other metals.

The other metals are selected according to the desired compound. In fact, it is known that is necessary to dope the iron oxide to give to the final oxide layer specific properties according to the magnetic or magneto-optical applications contemplated. Dopants can be transition metals such as chromium, manganese, iron$^{II}$, cobalt, nickel, copper, zinc, lead, barium, strontium, titanium, yttrium, gallium, bismuth, aluminum, and rare earth metals.

In an embodiment, the iron alkoxide and the alkoxide of the other metal are mixed in an organic solution.

In another embodiment, a double alkoxide of iron and the other metal is used.

The solubility of the alkoxides in their solvent is significant factor which can be determined by the men skilled in the art. In particular double alkoxides are more soluble than simple alkoxides of some metals such as cobalt, and they seem very attractive.

The synthesis of metal alkoxides has been known for a long time. Thus, the ammonia synthesis of iron ethoxide was disclosed in 1958 by D.C. BRADLEY and al, S. Chem. Soc., 1958, 126, and the synthesis by sodium ethoxide by P.A. THIESSEN and al, Z. Anorg. Allgem. Chem., 1929, p 180, n° 1, pp 65 - 74.

Metal alkoxides can exchange their alkyl groups, and this property can be used for this synthesis. The reaction can be represented by the following equation :

$$M(OR)_n + nR'OH \rightarrow M(OR')_n + nROH$$

where R is an alkyl residue and M a metal. If the alcohol R'OH has a boiling point higher than the alcohol ROH, the equilibrium can easily be displaced by removing ROH by fractional distillation. Thus, iron isopropoxide can be prepared from iron ethoxide and isopropyl alcohol.

Double alkoxides of iron can be prepared by a method disclosed by Mehrotra and al (Synth. React. Inorg. Mer - Inorg. Chem., 9(1), 79 - 88, 1979), for the double alkoxides of aluminum. First, a double alkoxide of iron and an alkali metal is prepared, and then, by an exchange reaction, the alkali metal is replaced by another metal such as cobalt or barium. The reaction can be represented by the following equation :

$$MCl_2 + 2KFe(OR)_4 \rightarrow M[Fe(OR_4)]_2 + 2KCl$$

where M is a metal and R is an alkyl residue.

A significant and critical problem of these syntheses is to obtain products free of impurities, of humidity and acidity. As these compounds are very quickly hydrolysed, it is necessary to work under an inert atmosphere, such as nitrogen or argon, in a glassware previously dried.

Examples of synthesis are mentioned below.

After hydrolysis has been carried out according to the method of the invention at a step where the product is not yet entirely gelled, the resulting polymer solution can be coated on a support. Any heat-proof support can be used. However, as the temperature of this treatment is lowered in the method of the invention, supports which are resistant at a temperature as low as 500°C, for example ordinary glass, can be used. These supports must not interfere with the desired properties of the final oxide layer. The polymer solution can be coated on the support by any known method, for example by spin coating or by dipping.

The resulting coatings are dried, then baked again to remove the organic residues and to recrystallize the desired oxide. It has been found that these oxides are formed at lower temperatures than those required in the prior art. This will be illustrated in example 6.

Any kinds of thin layers based on iron oxides can be prepared by the method according to the invention. A particularly interesting application of these thin layers is magnetic or magnetooptical recording. Among the compounds which can be used in this application and which can be prepared according to the method of the invention, we can mention $\gamma Fe_2O_3$, $Fe_3O_4$, $[Co_{1-x}Fe_x]Fe_2O_4$, $BaFe_{12}O_{19}$, $(Co_{1-x}Fe_x)(Fe_{1-y}Al_y)_2O_4$, garnets such as $Y_3Fe_5O_{12}$.

The following examples illustrate the invention :

Example 1 - Synthesis of iron$^{III}$ ethoxide $Fe(OC_2H_5)_3$ by the ammonia method.

The synthesis reaction can be represented by the following equation :

$$FeCl_3 + EtOH + 3 NH_3 \rightarrow Fe(OEt)_3 + 3NH_4Cl$$

In a 3 liter, 4 neck round bottom flask equipped with a magnetic stirrer, were fed 100 g of anhydrous iron$^{III}$ chloride and 1 liter of reagent grade benzene (water content less than 0.03 % w/w). The flask was previously dried under vacuum at 120-140°C, swept twice with argon and cooled down under argon. Sodium dried ethyl alcohol (500 ml) was directly distilled into the flask. At this step, most of the iron chloride was dissolved. Ammonia was then bubbled through the solution at a rate of 1.2 mole/hour during 3 hours. The reaction was slightly exothermic. The solution temperature raised up to about 45°C. A vigorous stirring was needed to ensure a good homogeneity of the mixture. The resulting precipitate was allowed to settle overnight and removed by filtration. The viscous dark brown residue obtained by evaporation under reduced pressure of the solvent was dissolved in ethanol (1 liter) from which dark brown crystals deposited. These crystals could be washed with dry ethanol, dissolved again by heating at 60°C and recrystallized. The solubility of these crystals was found to be close to 30 mg/ml at room temperature (0.15 mole/1) in ethanol, 1.4 mole/1 in carbon tetrachloride and 0.7 mole/1 in decane.

Example 2 - Synthesis of iron$^{III}$ ethoxide $Fe(OC_2H_5)_3$ by the sodium ethoxide method.

The synthesis reaction can be represented by the following equation :

$$FeCl_3 + 3\ EtOH + 3\ NaOEt \rightarrow Fe(OEt)_3 + 3\ NaCl$$

A solution of sodium ethoxide was prepared by dissolution of metal sodium in distilled ethanol. Iron chloride $FeCl_3$ (25 g, 0.15 mole) was added to benzene (200 ml) in a vessel. Ethanol (50 ml) was distilled in the vessel. The mixture was homogeneized with a mechanical stirrer. A sodium ethoxide solution (200 cm$^3$, containing 2.25 mole/1) was added dropwise to the first solution. After decanting overnight, the surnatant was filtered, the solvents removed by evaporation under vacuum and the residue crystallized from fresh ethanol. $Fe(OEt)_3$ crystals appeared after a few hours. They were washed and recrystallized from ethanol. As previously, all the operations were carried out in an inert atmosphere (argon or nitrogen).

Example 3 - Preparation of iron$^{III}$ isopropoxide

Crystals of iron ethoxide $Fe(OEt)_3$ were dissolved in a benzene solution. An excess of isopropyl alcohol was added to this solution. After refluxing one hour, ethyl alcohol was removed in the form of benzene-/ethanol azeotrope. The fractional distillation was stopped until ethyl alcohol was no longer detected in the distillation product. All these operations were repeated 3 times. Isopropyl alcohol was then removed in the form of benzene/isopropanol azeotrope. The viscous red-brown liquid obtained by evaporation of the benzene could be dissolved again in another solvent, according to the method of the invention.

Gas chromatography shows that a mixed alkoxide $Fe(O^iPr)_{3-x}(OEt)_x$ was obtained. The solubility of this compound in decane seemed to increase as x decreased.

Exemple 4 - Preparation of double alkoxides of iron$^{III}$.

The synthesis of Mehrotra above mentioned was used.

Two solutions of K(OEt) and $Fe(OR)_3$ in benzene were mixed in stoichiometric ratio. The resulting mixture was used to prepare double alkoxides of Fe $^{III}$/cobalt, of Fe $^{III}$/barium, of Fe $^{III}$/Fe $^{II}$.

To the benzenic solution prepared above was added metal chloride in stoichiometric ratio. Cobalt, barium and iron$^{II}$ chlorides are insoluble in benzene. The solutions were refluxed a few hours. A white precipitate of KCl slowly appeared which was filtered off. The surnatant solution contained the desired double alkoxide which is soluble, in opposition to the simple alkoxides of cobalt, barium and iron$^{II}$.

Example 5 - Hydrolysis of iron$^{III}$ ethoxide.

Three Fe $^{III}$ ethoxide solutions were prepared in an ethanol-butanol mixture (0.14, 0.10 and 0.07 mole/1) from crystallized iron ethoxide prepared in example 1 or 2. An amount of water defined in terms of water/alkoxide molar ratio, R, was added and the gelation rate was measured. Gelation was assumed to occur when no more flow of the product was observed when the tube containing it was put horizontal.

The curve illustrated by the figure was plotted, showing the gelation time versus R. A minimum for R = 30 was observed, whatever the initial concentration of the ethoxide might be.

Example 6 - Preparation of layers.

A viscous solution of Fe $^{III}$ ethoxide was used which was prepared as mentioned in example 5 from a solution containing 0.14 mole/1 of ethoxide hydrolysed with an amount of water such that R was equal to 4, during 10 hours.

This viscous solution was spin-coated on a glass support at 1500 rpm and the rotation time was 20 seconds. The layers thus prepared were heated under an inert atmosphere. Heat treatment procedure was the following :

– heating up to 120°C at a rate of 30°C/hour ;
– rest : 2 hours at 120°C ;
– heating up to 470°C at a rate of 50°C/hour ;
– rest : 3 hours at 470°C ;
– natural cooling to room temperature.

Very adhesive layers having a thickness $\leq$ 150 nm were obtained.

## Claims

1. A method for preparing thin layers of Fe$^{III}$ oxide by coating on a support a viscous solution of Fe$^{III}$ oxide polymer and by heat treating the coated support, said viscous solution being obtained :

1) by preparing a solution of Fe$^{III}$ alkoxide in an organic solvent of said alkoxide,

2) by adding in said solution an amount of water such that the water/alkoxide molar ratio ranges from 3 to 15, or from 60 to 80.

2. A method according to claim 1, wherein the water/alkoxide molar ratio is in the range of 3 to 6.

3. A method according to claims 1 or 2, wherein the organic solvent is a lower alcohol or a chlorinated solvent.

4. A method according to claim 3, wherein the lower alcohol is ethanol, isopropyl alcohol, butanol, or a mixture thereof.

5. A method according to any of claims 1 to 4, characterized in that the alkoxides are lower alkoxides having from 1 to 8 carbon atoms.

6. A method according to claim 5, wherein the alkoxide is an ethoxide, a propoxide, a butoxide, and mixtures thereof.

7. A method according to any of claims 1 to 4, wherein an alkoxide of iron$^{III}$ is mixed with at least an alkoxide of another metal which is soluble in the organic solvent.

8. A method according to any of claims 1 to 4, wherein a double alkoxide of iron and another metal is used.

9. A method according to any of claims 7 or 8, wherein the other metal is chromium, manganese, iron[II], cobalt, nickel, copper, zinc, lead, barium, strontium, titanium, yttrium, gallium, bismuth, aluminum, and rare earth metals.

10. The use of thin layers formed by the method according to any of claims 1 to 9 in magnetic or magneto-optical recording.

## Patentansprüche

1. Verfahren zur Herstellung von dünnen Schichten aus Fe[III]-Oxid durch Beschichtung eines Trägers mit einer viskosen Lösung von Fe[III]-Oxid-Polymer und durch Wärmebehandlung des beschichteten Trägers, wobei die viskose Lösung erhalten wurde

1) durch Herstellung einer lösung von Fe[III]-Alkoxid in einem organischen Lösungsmittel für das Alkoxid,

2) durch Zusatz einer Menge Wassers zu der Lösung, derart, daß die molaren Verhältnisbereiche von Wasser/Alkoxid bei 3 bis 15 oder 60 bis 80 lagen.

2. Verfahren nach Anspruch 1, in dem das molare Wasser/Alkoxid-Verhältnis im Bereich von 3 bis 6 liegt.

3. Verfahren nach Anspruch 1 oder 2, in dem das organische Lösungsmittel ein kurzkettiger Alkohol oder ein chloriertes Lösungsmittel ist.

4. Verfahren nach Anspruch 3, in dem der kurzkettige Alkohol aus Ethanol, Isopropylalkohol, Butanol oder einer Mischung hieraus besteht.

5. Verfahren nach einem der Ansprüche 1 bis 4, dadurch gekennzeichnet, daß die Alkoxide kurzkettige Alkoxide mit 1 bis 8 kohlenstoffatomen sind.

6. Verfahren nach Anspruch 5, in dem das Alkoxid ein Ethoxid, ein Propoxid, ein Butoxid oder eine Mischung hiervon ist.

7. Verfahren nach einem der Ansprüche 1 bis 4, in dem ein Alkoxid von Eisen''' mit mindestens einem Alkoxid eines anderen Metalles vermischt wird, das in dem organischen Lösungsmittel löslich ist.

8. Verfahren nach einem der Ansprüche 1 bis 4, in dem ein Doppel-Alkoxid aus Eisen und einem anderen Metall verwendet wird.

9. Verfahren nach einem der Ansprüche 7 oder 8, in dem das andere Metall aus Chrom, Mangan, Eisen[II], Cobalt, nickel, kupfer, Zink, blei, Barium, Strontium, Titan, Yttrium, Gallium, Wismuth, Aluminium oder seltenen Erdmetallen besteht.

10. Verwendung von dünnen Schichten, die nach einem Verfahren gemäß einem der Ansprüche 1 bis 9 hergestellt worden sind, für die magnetische oder magnetisch-optische Aufzeichnung.

## Revendications

1. Procédé de préparation de couches minces à base d'oxyde de Fe[III] par application sur un support d'une solution visqueuse de polymère d'oxyde de fer[III] et traitement thermique du support enduit, ladite solution visqueuse étant obtenue :

1) en préparant une solution de l'alcoxyde de Fe[III] dans un solvant organique de l'alcoxyde,

2) en introduisant dans cette solution une quantité d'eau telle que le rapport molaire eau/alcoxyde soit compris entre 3 et 15, ou entre 60 et 80.

2. Procédé conforme à la revendication 1, dans lequel le rapport molaire eau/alcoxyde est compris entre 3 et 6.

3. Procédé conforme aux revendications 1 ou 2, dans lequel le solvant organique est un alcool inférieur ou un solvant chloré.

4. Procédé conforme à la revendication 3, dans lequel l'alcool inférieur est l'éthanol, l'alcool isopropylique, le butanol, ou un mélange de ces alcools.

5. Procédé conforme à l'une quelconque des revendications 1 à 4, caractérisé en ce que les alcoxydes sont des alcoxydes inférieurs comprenant de 1 à 8 atomes de carbone.

6. Procédé conforme à la revendication 5, dans lequel l'alcoxyde est un éthoxyde, un propoxyde, un butoxyde, et des mélanges de ces composés.

7. Procédé conforme à l'une quelconque des revendications 1 à 4, dans lequel on mélange un alcoxyde de fer[III] avec au moins un alcoxyde d'un autre métal soluble dans le solvant organique.

8. Procédé conforme à l'une quelconque des revendications 1 à 4, dans lequel on utilise un alcoxyde double de fer et d'un autre métal.

9. Procédé conforme à l'une quelconque des revendications 7 ou 8, dans lequel l'autre métal est le chrome, le manganèse, le fer[II], le cobalt, le nickel, le cuivre, le zinc, le plomb, le baryum, le strontium, le titane, l'yttrium, le gallium, le bismuth, l'aluminium, et les métaux de terre rare.

10. Utilisation des couches minces formées par le procédé conforme à l'une quelconque des revendications 1 à 9 pour l'enregistrement magnétique ou magnétooptique.